# EUROPÄISCHE PATENTSCHRIFT

(11) **EP 1 570 194 B1**
(45) Veröffentlichungstag und Bekanntmachung des Hinweises auf die Patenterteilung: **05.05.2010**
(21) Anmeldenummer: 03780108.1
(22) Anmeldetag: 03.12.2003
(51) Int. Cl.: F16H 3/12

(54) **ELEKTROMAGNETISCH BETÄTIGBARE GETRIEBEBREMSE**
ELECTROMAGNETICALLY ACTUATED TRANSMISSION BRAKE
FREIN DE BOITE DE VITESSES A ACTIONNEMENT ELECTROMAGNETIQUE

(30) Priorität: 14.12.2002 DE 10258505
(43) Veröffentlichungstag der Anmeldung: 07.09.2005
(73) Patentinhaber: ZF Friedrichshafen AG, 88038 Friedrichshafen (DE)
(72) Erfinder: RENNER, Stefan, 78351 Bodman-Ludwigshafen (DE); KELLER, Reiner, 78351 Ludwigshafen-Bodman (DE); ULBRICHT, Markus, 88069 Tettnang (DE)
(86) Internationale Anmeldenummer: PCT/EP2003/013619
(87) Internationale Veröffentlichungsnummer: WO 2004/055412

(56) Entgegenhaltungen:
- EP-A- 0 735 295
- EP-A- 0 822 354
- EP-A- 1 136 727
- DE-A- 2 622 927
- DE-A- 19 652 916
- SU-A- 708 085
- US-A- 3 404 762
- US-A- 4 844 223
- US-A- 5 186 288

## Beschreibung

Die Erfindung betrifft eine Getriebebremse mit einem Gehäuse, mit wenigstens einem in Bezug auf das Gehäuse drehfest angeordneten Reibkörper und mit wenigstens einem weiteren auf einer abzubremsenden Getriebewelle befestigten Reibkörper sowie mit einer Betätigungsvorrichtung, durch die ein Betätigungselement gegen diese Reibkörper axial anpreßbar ist.

Eine derartige Getriebebremse ist beispielsweise aus der DE 196 52 916 A1 bekannt. Mit dieser lässt sich bei einem automatisierten Schaltgetriebe in Vorgelegebauweise eine Vorgelegewelle mit den darauf befestigten Zahnrädern in ihrer Drehzahl sinnvoll dann abbremsen, wenn bei einem Hochschaltvorgang zur Drehzahlsynchronisation die Reduzierung der Drehzahl des Antriebszahnrades des höheren Ganges notwenig ist. Zur Durchführung derartiger Abbremsvorgänge verfügt diese bekannte Getriebebremse über einander gegenüberstehende Bremslamellen, die an dem in das Gehäuse der Getriebebremse hineinragenden Ende einer Vorgelegewelle bzw. an dem Getriebebremsengehäuse drehfest und axial verschieblich angeordnet sind. Zudem ist in dem Gehäuse der Getriebebremse eine druckmittelbetätigbare Kolben-ZylinderAnordnung ausgebildet, mit deren Kolben die Bremslamellen gegeneinander pressbar sind.

Wenngleich diese bekannte Getriebebremse an sich sehr vorteilhaft ausgebildet ist, benötigt sie dennoch ein Hydraulik- oder Pneumatiksystem, das den Zylinder der Kolben-Zylinder-Anordnung mit dem zur Bremsbetätigung notwenigen Betätigungsdruck versorgt. Dies ist zwar dann nicht nachteilig, wenn in dem Fahrzeug außer der Getriebebremse auch noch andere Fahrzeugkomponenten vorhanden sind, die mit einem hydraulischen oder pneumatischen Betätigungs- oder Steuerdruck versorgt werden müssen. Da es aber auch Fahrzeuge gibt, bei denen die Getriebebremse die einzige Vorrichtung ist, die einen hydraulischen oder pneumatischen Betätigungs- oder Steuerdruck benötigt, bedeutet deren Einbau in ein solches Fahrzeug einen nicht unerheblichen Kostenfaktor. Ein grundsätzlicher Nachteil von fluidisch betätigten Getriebebremsen in Kolben-Zylinder-Anordnungen ist zudem, dass diese vergleichsweise viel Bauraum für ihre zusätzlichen Ansteuerungskomponenten (z. B. Magnetventile) in einem Fahrzeugbereich benötigen, in dem es oft sowieso schon sehr beengt ist.

Vor diesem Hintergrund besteht die Aufgabe an die Erfindung darin, eine Getriebebremse vorzustellen, die ohne ein pneumatisches oder hydraulisches Drucksystem betätigbar ist und zudem keinen großen Bauraum benötigt.

Die Lösung dieser Aufgabe ergibt sich aus den Merkmalen des Hauptanspruchs, während vorteilhafte Ausgestaltungen und Weiterbildungen der Erfindung den Unteransprüchen entmehmbar sind.

Aus US-A-4 844 233 ist eine Getriebebrense mit die Merkmale des Oberbegriffs des Anspruchs 1 bekannt.

Demnach ist vorgesehen, dass die Reibkörper durch ein Betätigungselement aufeinander pressbar sind, das von einer elektromagnetischen Betätigungsvorrichtung axial bewegbar ist. Durch diesen konstruktiven Aufbau der Getriebebremse kann kostensparend auf ein Hydraulik- oder Pneumatiksystem im Kraftfahrzeug verzichtet werden.

In einer bevorzugten Ausgestaltung der Erfindung ist vorgesehen, dass die Betätigungsvorrichtung über eine elektromagnetisch wirksame Ringspule verfügt, die gesteuert von einer Getriebesteuerungs- und -regelungseinrichtung mit einem Spulenstrom versorgbar ist. In einer anderen Variante der Erfindung können anstelle einer Ringsspule auch mehrere Einzelspulen in dem Gehäuse der Getriebebremse vorzugsweise ringförmig angeordnet sein.

Zur Reduzierung des für die Getriebebremse notwendigen Bauraumes kann darüber hinaus vorgesehen sein, dass diese Getriebebremse vollständig oder aber zumindest teilweise in der Wand des Getriebegehäuses integriert ist.

In diesem Zusammenhang besteht die Möglichkeit, dass die Reibkörper zumindest teilweise in einer Öffnung derjenigen Getriebegehäusewand angeordnet sind, in der die abzubremsende Vorgelegewelle hineinragt. Ein gegebenenfalls überstehender Abschnitt der Getriebebremse, insbesondere der die Ringspule aufnehmende Bereich, ragt dann zum Teil in das Getriebegehäuse hinein oder aus diesem heraus.

Die Ringspule kann dabei in einem als Gehäuse für die Getriebebremse fungierenden Deckel befestigt sein, der seinerseits über Befestigungsmittel mit dem Getriebegehäuse verbunden ist. Darüber hinaus kann der Deckel auch zur Abdeckung von weiteren an der Getriebegehäusewand befestigten Betätigungseinrichtungen dienen. Zur Ausbildung eines guten Magnetflusses bei Beaufschlagung der Ringspule mit einem elektrischen Strom besteht dieses Gehäuse vorzugsweise aus einem metallischen Werkstoff.

Hinsichtlich der Reibkörper kann vorgesehen sein, dass diese als Bremslamellen ausgebildet und auf der abzubremsenden Getriebewelle bzw. an dem Getriebegehäuse drehfest und axial beweglich angeordnet sind. Dazu ist an dem in das Gehäuse der Getriebebremse hineinragenden Ende der Vorgelegewelle eine Außensteckverzahnung ausgebildet, während die Öffnung des Getriebegehäuses mit einer Innensteckverzahnung versehen ist.

Bezüglich der Reibflächen der Reibkörper wird es als vorteilhaft angesehen, wenn deren Oberfläche gewellt, vorzugsweise sinusförmig gewellt ist.

Zur Betätigung der Getriebebremse und insbesondere zum Zusammenpressen der Bremslamellen verfügt diese in der ersten Variante (Version B) der Erfindung über einen der Spule zugeordneten Anker, der auf der Steckverzahnung der Getriebewelle axial beweglich angeordnet ist. Es wird in diesem Zusammenhang als vorteilhaft angesehen, auf der Getriebewelle einen vorzugsweise scheibenförmigen Ringanker anzuordnen, der von der Spule zum Zusammenpressen der Bremslamellen axial bewegbar ist.

In einer zweiten Variante (Version A) ist vorgesehen, dass der Ringanker in derjenigen Steckverzahnung der Getriebegehäusewand axial verschiebar und drehfest angeordnet ist.

Zudem kann auf der von der Ringspule wegweisenden Seite der Getriebebremse an dem Getriebegehäuse eine Befestigungsscheibe oder an der Vorgelegewelle ein radialer Steg angeordnet sein, die eine einseitige axiale Fixierung des Ringsankers ermöglicht oder doch zumindest unterstützt.

Zum besseren Verständnis der Erfindung sowie ihrer unterschiedlichen Ausführungsformen ist der Beschreibung eine Zeichnung beigefügt, die eine schematische Querschnittsdarstellung der elektromechanisch betätigbaren Getriebebremse zeigt.

Die Getriebebremse 1 erstreckt sich demnach zu einem Teil ihrer axialen Länge in einer Öffnung eines Getriebegehäuses 2. In diese Getriebebremse 1 ragt darüber hinaus eine Getriebewelle 3 hinein, die im Bereich der Getriebegehäusewand 2 über eine Außensteckverzahnung 10 verfügt. Auf dieser Steckverzahnung 10 sind radial nach außen weisende und zueinander beabstandete Reibkörper 4 drehfest und axial verschieblich befestigt. In die Zwischenräume zwischen den radial nach außen weisenden Reibkörper 4 greifen radial nach innen weisende Reibkörper 5 ein, die am Rand der genannten Getriebegehäuseöffnung auf einer Innensteckverzahnung 11 drehfest und axial verschieblich angeordnet sind. Die Reibkörper 4, 5 sind dabei vorzugsweise als Bremslamellen ausgebildet.

Im Bereich der von der Getriebewelle 3 wegweisende Seite der Getriebegehäusewand 2 ist ein halbschalig ausgebildetes Gehäuse 13 der Getriebebremse 1 angeordnet, das über hier nur angedeutete Befestigungsmittel 15 mit der Getriebegehäusewand 2 verbunden ist. Innerhalb des Gehäuses 13 der Getriebebremse 1 ist eine elektromagnetisch wirksame Ringspule 6, 7 angeordnet, bei deren Bestromung auf einen Ringanker 8 eine axial wirkende Magnetkraft ausgeübt wird.

Der Ringanker 8 ist entweder auf der Außensteckverzahnung 10 der Getriebewelle 3 (Version B) oder auf der Innensteckverzahnung 11 des Getriebegehäuses 2 (Version A) aufgesteckt, so dass der Ringanker 8 durch die Magnetkraft gemäß dem Pfeil 9 axial gegen die Bremslamellen 4, 5 der Getriebebremse 1 anpressbar ist. Dabei hat die Axialbewegung 9 des Ringankers 8 zu der Spule 6, 7 dann ein Ende, wenn alle Bremslamellen 4, 5 gegen eine Anlauffläche 14 am Gehäuse 13 der Getriebebremse 1 verpresst sind. Eine Befestigungsscheibe 12, die an der Innenseite des Getriebegehäuses 2 oder als radial ausgerichteter Steg 28 an der Getriebewelle 3 befestigt ist, begrenzt dagegen die Axialbewegung des Ringankers 8 in Richtung zum Innenraum des Getriebegehäuses 2.

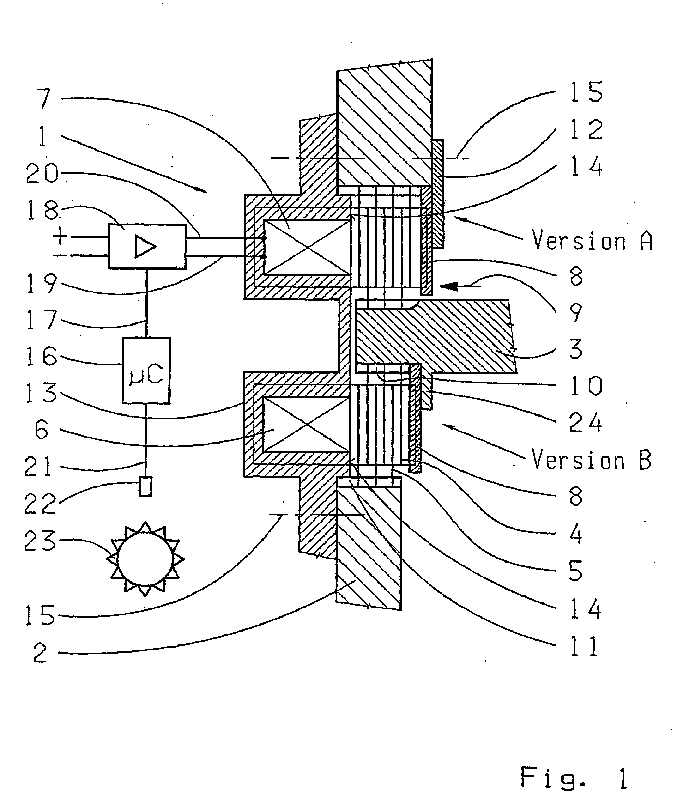

Die Abbildung zeigt zudem, dass die Spule 6,7 über elektrische Leitungen 19, 20 mit einer Spannungsquelle verbunden ist. Eine der Getriebebremse 1 zugeordnete Steuerungs- und Regelungseinrichtung 16 regelt die Stromversorgung der Spule 6, 7 in Abhängigkeit von der Drehzahl der abzubremsenden Getriebewelle 3. Schematisch zeigt die Zeichnung, dass diese Drehzahl beispielsweise mit Hilfe eines Zahnrades 23 auf der Getriebewelle 3 und einem Drehzahlsensor 22 ermittelbar ist, dessen Messwerte über eine Signalleitung 21 der Steuerungs- und Regelungseinrichtung 16 zur Verfügung gestellt werden.

Sobald ein in der Steuerungs- und Regelungseinrichtung 16 abgespeichertes Datenverarbeitungsprogramm u. a. aufgrund der gemessenen Drehzahlinformationen ermittelt hat, dass die Getriebebremse 1 lösend oder bremsend zu betätigen ist, gibt diese Steuerungseinrichtung 16 ein Steuerungssignal über eine Steuerungsleitung 17 in Form einer pulsweitenmodulierten Spannung an eine Treiberstufe 18, mit der die Stromversorgung zu der Spule 6, 7 geregelt wird kann.

Dieses Ausführungsbeispiel verdeutlicht, dass eine Getriebebremse auch ohne hydraulische oder pneumatische Betätigungsvorrichtung realisierbar ist. Die Integration von wesentlichen Bestandteilen der Getriebebremse in die Getriebegehäusewand erlaubt zudem eine sehr kompakte Bauweise.

Darüber hinaus ermöglicht die erfindungsgemäße elektromagnetische Getriebebremse 1 eine sehr gute Regelbarkeit der Vorgelegewellendrehzahl, während mit den bisher bekannten druckmittelbetätigbaren Getriebebremsen über die Ansteuerung eines Magnetventils einer Kolben-ZylinderAnordnung die gewünschte Vorgelegewellendrehzahl nur grob steuerbar ist. Insbesondere durch die vorgeschlagene pulsweitenmodulierte Regelungsspannung kann in der Ringspule 6, 7 der erfindungsgemäßen Getriebebremse 1 ein Regelungsstrom einstellt werden, der proportional zu der von der Getriebebremse erzeugten Bremskraft ist. Über diese Drehzahlsteuerung der Vorgelegewelle 3 kann somit vergleichsweise einfach eine Regelung für den gesamten Synchronisationsvorgang bei einem Gangwechsel aufgebaut werden.

Die Vorteile einer solchen regelbaren Getriebebremse liegen auf der Hand. So lässt sich beispielsweise ein variabler Bremsgradient eingestellt werden, mit dem sich der Synchronisierungsablauf bei einem Gangwechsel verbessern lässt. Darüber hinaus sind mit einer solchen Getriebebremse auch Schaltabläufe an sich besser als bisher steuerbar.

Zudem kann diese regelbare Getriebebremse 1 direkt auf sich ändernde Reibwerte ihrer Reibelemente 4, 5 reagieren und dadurch beispielsweise Verschleiß- oder Überhitzungserscheinungen berücksichtigen. Schließlich kann die regelbare elektromagnetische Getriebebremse 1 auch als Schwingungsdämpfer im Antriebsstrang genutzt werden. Dabei wird die Getriebebremse 1 immer dann kurzzeitig betätigt, wenn ein störender Anstieg einer Schwingungsamplitude im Antriebsstrang sensiert wird. Auf diese Weise kann bei dementsprechender Auslegung der Getriebebremse auf einen gesondertes Zweimassenschwungrad verzichtet werden kann.

Mit der erfindungsgemäßen Getriebebremse ist der weitere Vorteil verbunden, dass aufgrund derer Regelbarkeit auch eine Kompensation der Reibelementtemperatur erfolgen kann. Diese Temperaturkompensation ist dabei vorzugsweise bereits Bestandteil des in der Steuerungs- und Regelungseinrichtung abgespeicherten Steuerungs- und Regelungsprogramms.

Ein weiterer Aspekt der Erfindung betrifft die regelbar Bremskraft der Getriebebremse, so dass diese für unterschiedliche Getriebe ohne große bauliche Veränderungen nutzbar ist. Notwendige Anpassungen beschränken sich in aller Regel auf eine Veränderung der Steuerungs- und Regelungssoftware in der Steuerungs- und Regelungseinrichtung und ggf. auf eine Veränderung der Anzahl der Bremslamellen.

In einer anderen Ausgestaltung der Erfindung sind die Bremslamellen so ausgebildet, dass ihre Oberfläche gewellt, vorzugsweise in Umfangsrichtung sinusförmig gewellt ist. Durch einen solchen Aufbau erfolgt ein besonders schnelles Lösen der Reibelemente voneinander beim Abschalten des Spulenstroms, so dass die Getriebebremse bei schnellen Regelvorgaben mit schnellen Anpress- und Lösvorgängen reagieren kann.

Mit der hier vorgestellten Getriebebremse ist demnach unter allen Randbedingungen immer ein optimaler Synchronisationsvorgang realisierbar ist.

### Bezugszeichen

- 1: Getriebebremse
- 2: Getriebegehäusewand
- 3: Getriebewelle
- 4: Reibkörper; Innenlamelle
- 5: Reibkörper; Außenlamelle
- 6: Ringspule
- 7: Ringspule
- 8: Ringanker
- 9: Schließrichtung
- 10: Außensteckverzahnung
- 11: Innensteckverzahnung
- 12: Befestigungsscheibe
- 13: Gehäuse der Getriebebremse; Deckel
- 14: Anlauffläche
- 15: Befestigungsmittel
- 16: Steuerungs- und Regelungseinrichtung
- 17: Steuerleitung
- 18: Treiberstufe
- 19: Elektrische Leitung
- 20: Elektrische Leitung
- 21: Sensorleitung
- 22: Drehzahlsensor
- 23: Zahnrad
- 24: Steg an der Getriebewelle

## Patentansprüche

1. Getriebebremse (1), mit einem Gehäuse (13), mit wenigstens einem auf einer abzubremsenden Getriebewelle (3) auf einer Außensteckverzahnung (10) befestigten Reibkörper (4) und mit wenigstens einem in Bezug auf das Gehäuse (13) auf einer Innensteckverzehnung (11) an einer Öffnung in einer Getriebegehäusewand (2) drehfest angeordneten Reibkörper (5) sowie mit einer Betätigungsvorrichtung, durch die ein mittels einer elektromagnetischen Betätigungsvorrichtung bewegbares Betätigungselement (8) gegen diese Reibkörper (4, 5) axial anpressbar ist, **dadurch gekennzeichnet, dass** auf der Außensteckverzahnung (10) der Getriebewelle (3) und/oder der Innensteckverzahnung (11) der Getriebegehäusewand (2) ein Anker (8) als Betätigungselement drehfest und axial beweglich angeordnet ist und dass die Getriebewelle (3) eine Vorgelegewelle eines automatischen oder automatisierten Schaltgetriebes ist.

2. Getriebebremse nach Anspruch 1, **dadurch gekennzeichnet, dass** die Betätigungsvorrichtung eine elektromagnetisch wirksame Ringspule (6, 7) umfasst, die über eine von einer Steuerungs- und Regelungseinrichtung (16) generierte pulsweitenmodulierte Spannung und eine Treiberstufe (18) mit einem geregelten Spulenstrom versorgbar ist.

3. Getriebebremse nach Anspruch 2, **dadurch gekennzeichnet, dass** anstelle einer Ringsspule (6, 7) mehrere Einzelspulen (6, 7) in dem Gehäuse (13) der Getriebebremse (1) vorzugsweise ringförmig angeordnet sind.

4. Getriebebremse nach Anspruch 1, 2 oder 3, **dadurch gekennzeichnet, dass** die Getriebebremse (1) zumindest teilweise in eine Getriebegehäusewand (2) integriert ist.

5. Getriebebremse nach Anspruch 4, **dadurch gekennzeichnet, dass** die Ringspule (6, 7) in einem halbschaligen Gehäuse (13) der Getriebebremse (1) angeordnet ist, das mit seiner offenen Seite an dem Getriebegehäuse (2) befestigt ist.

6. Getriebebremse nach wenigstens einem der vorherigen Ansprüche, **dadurch gekennzeichnet, dass** die Reibkörper (4) auf der Getriebewelle (3) und die Reibkörper (5) an dem Getriebegehäuse (2) axial beweglich angeordnet sind.

7. Getriebebremse nach wenigstens einem der Ansprüche 1 bis 6, **dadurch gekennzeichnet, dass** die Reibkörper (4, 5) als Bremslamellen ausgebildet sind.

8. Getriebebremse nach Anspruch 7, **dadurch gekennzeichnet, dass** die Oberfläche der Reibkörper (4, 5) gewellt, vorzugsweise sinusförmig gewellt ist.

9. Getriebebremse nach einem der vorherigen Ansprüche, **dadurch gekennzeichnet, dass** der Anker (8) als Ringanker ausgebildet ist.

10. Getriebebremse nach wenigstens einem der vorherigen Ansprüche, **dadurch gekennzeichnet, dass** die Reibkörper (4, 5) am Getriebegehäuse (2) und auf der Getriebewelle (3) von dem Anker (8) unter der Einwirkung der von der Ringspule (6, 7) erzeugbaren Magnetkräfte in Richtung zu gehäusefesten Anlaufflächen (14) im Bereich der Ringspule (6, 7), vorzugsweise an dem Getriebebrenisengehäuse (13) pressbar sind.

11. Getriebebremse nach wenigstens einem der vorherigen Ansprüche, **dadurch gekennzeichnet, dass** die Steuerungs- und Regelungseinrichtung (16) derartig ausgebildet ist, dass mit dieser variable Bremsgradienten an der Getriebebremse (1) einstellbar sind.

12. Getriebebremse nach wenigstens einem der vorherigen Ansprüche, **dadurch gekennzeichnet, dass** die Steuerungs- und Regelungseinrichtung (16) derartig ausgebildet ist, dass mit dieser die Getriebebremse als Schwingungsdämpfer, vorzugsweise als Drehschwingungsdämpfer in einem Antriebsstrang betreibbar ist.

## Claims

1. Transmission brake (1), having a casing (13), having at least one friction body (4) which is attached to a transmission shaft (3) which is to be braked on an external intermeshing toothing system (10), and having at least one friction body (5) which is arranged in a rotationally fixed fashion with respect to the casing (13) on an internal intermeshing toothing system (11) at an opening in a transmission casing wall (2), as well as having an actuation device by means of which an actuation element (8), which can move by means of an electromagnetic actuation device, can be pressed axially against these friction bodies (4, 5), **characterized in that** an armature (8) is arranged in an axially mobile and rotationally fixed fashion as an actuation element on the external intermeshing toothing system (10) of the transmission shaft (3) and/or on the internal intermeshing toothing system (11) of the transmission casing wall (2), and **in that** the transmission shaft (3) is a layshaft of an automatic or automated change-speed transmission.

2. Transmission brake according to Claim 1, **characterized in that** the actuation device comprises an electromagnetically active annular coil (6, 7) which can be supplied with a regulated coil current via a pulse-width-modulated voltage which is generated by an open-loop and closed-loop control device (16), and via a driver stage (18).

3. Transmission brake according to Claim 2, **characterized in that**, instead of an annular coil (6, 7), a plurality of individual coils (6, 7) are arranged, preferably in an annular shape, in the casing (13) of the transmission brake (1).

4. Transmission brake according to Claim 1, 2 or 3, **characterized in that** the transmission brake (1) is integrated at least partially into a transmission casing wall (2).

5. Transmission brake according to Claim 4, **characterized in that** the annular coil (6, 7) is arranged in a half-shell casing (13) of the transmission brake (1), which casing (13) is attached by its open side to the transmission casing wall (2).

6. Transmission brake according to at least one of the preceding claims, **characterized in that** the friction bodies (4) are arranged in an axially mobile fashion on the transmission shaft (3), and the friction bodies (5) are arranged in an axially mobile fashion on the transmission casing wall (2).

7. Transmission brake according to at least one of Claims 1 to 6, **characterized in that** the friction bodies (4, 5) are embodied are brake lamellas.

8. Transmission brake according to Claim 7, **characterized in that** the surface of the friction bodies (4, 5) is corrugated, preferably corrugated sinusoidally.

9. Transmission brake according to one of the preceding claims, **characterized in that** the armature (8) is embodied as an annular armature.

10. Transmission brake according to at least one of the preceding claims, **characterized in that** the friction bodies (4, 5) can be pressed onto the transmission casing wall (2) and onto the transmission shaft (3) by the armature (8) under the effect of the magnetic forces, which can be generated by the annular coil (6, 7), in the direction of run-up faces (14), fixed to the casing, in the region of the annular coil (6, 7), preferably on the transmission brake casing (13).

11. Transmission brake according to at least one of the preceding claims, **characterized in that** the open-loop and closed-loop control device (16) is embodied in such a way that it can be used to set variable brake gradients at the transmission brake (1).

12. Transmission brake according to at least one of the preceding claims, **characterized in that** the open-loop and closed-loop control device (16) is embodied in such a way that it can be used to operate the transmission brake as a vibration damper, preferably as a rotary vibration damper, in a drive train.

## Revendications

1. Frein de transmission (1), comprenant un boîtier (13), au moins un corps de friction (4) fixé sur une denture enfichable extérieure (10) sur un arbre de transmission (3) à freiner et au moins un corps de friction (5) disposé de manière solidaire en rotation sur une denture enfichable intérieure (11) par rapport au boîtier (13) au niveau d'une ouverture dans une paroi (2) du boîtier de transmission, ainsi qu'un dispositif d'actionnement, par le biais duquel un élément d'actionnement (8) déplaçable au moyen d'un dispositif d'actionnement électromagnétique peut être pressé axialement contre ces corps de friction (4, 5), **caractérisé en ce qu'**un induit (8) servant d'élément d'actionnement est disposé de manière solidaire en rotation et déplaçable axialement sur la denture enfichable extérieure (10) de l'arbre de transmission (3) et/ou sur la denture enfichable intérieure (11) de la paroi (2) du boîtier de transmission, et **en ce que** l'arbre de transmission (3) est un arbre intermédiaire d'une transmission à changement de vitesse automatique ou automatisée.

2. Frein de transmission selon la revendication 1, **caractérisé en ce que** le dispositif d'actionnement comprend une bobine annulaire (6, 7) à action électromagnétique, qui peut être alimentée en un courant de bobine régulé par le biais d'une tension à largeur d'impulsion modulée générée par un dispositif de commande et de régulation (16) et d'un amplificateur d'attaque (18).

3. Frein de transmission selon la revendication 2, **caractérisé en ce que** l'on dispose, au lieu d'une bobine annulaire (6, 7), plusieurs bobines individuelles (6, 7) de préférence sous forme annulaire dans le boîtier (13) du frein de transmission (1).

4. Frein de transmission selon la revendication 1, 2 ou 3, **caractérisé en ce que** le frein de transmission (1) est intégré au moins en partie dans une paroi (2) du boîtier de transmission.

5. Frein de transmission selon la revendication 4, **caractérisé en ce que** la bobine annulaire (6, 7) est disposée dans un boîtier (13) en forme de demi-coque du frein de transmission (1), qui est fixé avec son côté ouvert à la paroi (2) du boîtier de transmission.

6. Frein de transmission selon au moins l'une quelconque des revendications précédentes, **caractérisé en ce que** les corps de friction (4) sont disposés de manière mobile axialement sur l'arbre de transmission (3) et les corps de friction (5) sont disposées de manière mobile axialement sur la paroi (2) du boîtier de transmission.

7. Frein de transmission selon au moins l'une quelconque des revendications précédentes 1 à 6, **caractérisé en ce que** les corps de friction (4, 5) sont réalisés sous forme de lamelles de frein.

8. Frein de transmission selon la revendication 7, **caractérisé en ce que** la surface des corps de friction (4, 5) est ondulée, de préférence ondulée en forme sinusoïdale.

9. Frein de transmission selon l'une quelconque des revendications précédentes, **caractérisé en ce que** l'induit (8) est réalisé sous forme d'induit annulaire.

10. Frein de transmission selon au moins l'une quelconque des revendications précédentes, **caractérisé en ce que** les corps de friction (4, 5) sur la paroi (2) du boîtier de transmission et sur l'arbre de transmission (3) peuvent être pressés par l'induit (8) sous l'effet des forces magnétiques pouvant être générées par la bobine annulaire (6, 7) dans la direction des faces d'arrêt (14) fixées au boîtier dans la région de la bobine annulaire (6, 7), de préférence au niveau du boîtier de frein de transmission (13).

11. Frein de transmission selon au moins l'une quelconque des revendications précédentes, **caractérisé en ce que** le dispositif de commande et de régulation (16) est réalisé de telle sorte que l'on puisse ajuster avec lui des degrés de freinage variables au niveau du frein de transmission (1).

12. Frein de transmission selon au moins l'une quelconque des revendications précédentes, **caractérisé en ce que** le dispositif de commande et de régulation (16) est réalisé de telle sorte que l'on puisse commander avec lui le frein de transmission en tant qu'amortisseur de vibrations, de préférence en tant qu'amortisseur de vibrations de torsion dans une chaîne de transmission.
